(19) **Europäisches Patentamt**
**European Patent Office**
**Office européen des brevets**

(11) Veröffentlichungsnummer: **0 037 531**
**A2**

(12) **EUROPÄISCHE PATENTANMELDUNG**

(21) Anmeldenummer: **81102297.9**

(22) Anmeldetag: **26.03.81**

(51) Int. Cl.³: **H 02 K 15/10**
**H 01 F 41/12, H 02 K 3/34**

(30) Priorität: **31.03.80 DE 3012496**

(43) Veröffentlichungstag der Anmeldung:
**14.10.81 Patentblatt 81/41**

(84) Benannte Vertragsstaaten:
**AT BE DE FR GB IT NL**

(71) Anmelder: SIEMENS AKTIENGESELLSCHAFT Berlin
und München
Postfach 22 02 61
D-8000 München 22(DE)

(72) Erfinder: Maier, Erich
Am Eselsbach 11
D-8700 Würzburg(DE)

(72) Erfinder: Nitt, Karl-Heinz
An den Mühltannen 12
D-8700 Würzburg(DE)

(72) Erfinder: Schäfer, Helmut
Bremenweg 14a
D-8700 Würzburg(DE)

(72) Erfinder: Kabs, Hermann, Dipl.-Phys.
Schwandorfer Strasse 16
D-8500 Nürnberg(DE)

(72) Erfinder: Grimmer, Rudolf, Dr.
Reinschartenweg 17a
D-8520 Erlangen(DE)

(54) Verfahren zur Herstellung einer elektrischen Wicklung.

(57) Zur Festlegung der gewickelten Wicklungsdrähte soll ein backfähiges Depotmaterial beigegeben werden. Erfindungsgemäß wird zum Einbringen des backfähigen Depotmaterials nicht ein spezieller Backlackdraht (Wicklungsdraht mit am Umfang aufgetragener Backlackschicht) verwendet oder wechselweise zwischen Wicklungsdrahtlagen eine zu verschmelzende Depotfadenlage vorgesehen, sondern ein diskreter backfähiger Depotfaden gleichzeitig parallel Windung für Windung mit einem üblichen lackisolierten Wicklungsdraht gewickelt; dadurch läßt sich eine Verfestigung der Spulenwicklung durch Verbacken auf einfache Weise und praktisch ohne Erhöhung des Nutfüllfaktors erzielen, da der diskrete Depotfaden weitgehend die an sich vorhandenen freien Zwickel zwischen benachbarten Wicklungsdrähten der gewickelten Spulenwicklung einnimmt. Auf ein gesondertes Formpressen kann insbes. dann verzichtet werden, wenn der mechanische Druck aufgrund einer entsprechenden Wickeldraht-Vorspannung beim Wickeln groß genug gewählt ist.

Eine Anwendung ist insbesondere für in Nuten von Blechpaketen gewickelte Ständerwicklungen von Kleinmotoren geeignet.

FIG 1

FIG 10

SIEMENS AKTIENGESELLSCHAFT          Unser Zeichen
Berlin und München                  VPA 80 P 3038 E

Verfahren zur Herstellung einer elektrischen Wicklung

Die Erfindung bezieht sich auf ein Verfahren zur Herstellung einer elektrischen Wicklung aus einer Vielzahl von Wicklungsdraht-Windungen und einem diskreten, gewickelten backfähigen Depotfaden zur Festlegung der Wicklung; ein derartiges Verfahren ist aus der DE-OS 28 10 183 bekannt.

Im bekannten Fall der DE-OS 28 10 183 werden zur Herstellung einer Ankerwicklung einer elektrischen Maschine auf einen Spulentragkörper eines lamellierten Eisenkerns nacheinander mehrere übereinanderliegende Wicklungslagen aus einer Vielzahl nebeneinanderliegender Drahtwindungen aufgebracht und auf die obere letzte und gegebenenfalls vorletzte derartige Wicklungslage ein Schmelzkleberfaden aufgewickelt; anschließend werden durch kurzseitige Zuführung von Wärmeenergie die nebeneinanderliegenden Wicklungen des Schmelzkleberfadens zu einer Kunststoffschicht zusammengeschmolzen.

Bei einem anderen bekannten Verfahren (DE-Gbm 76 40 891) werden für eine Spulenwicklung Wicklungsdrähte verwendet, deren äußere Isolier-Lackschicht von einer weiteren Backlack-Schicht umgeben ist. Als Backlackmaterial kann sowohl ein Thermoplast als auch ein Duroplast vorgesehen werden. Die Backlack-Spulendrähte verbacken nur dann zuverlässig miteinander und/oder mit dem Spulenträger, wenn sie fest gegeneinander gedrückt werden. Es ist bekannt, dazu den Preßdruck entweder durch elektromagnetisch

Bk 2 Bih / 17.03.1981

wirkende Kräfte mittels eines kräftigen Stromstoßes durch die Spule oder durch auf die gewickelte Wicklung von außen einwirkende Preßformen zu erzeugen. Zweckmäßigerweise wird insbesondere bei einer in Nuten eines Ständers oder eines Läufers einer elektrischen Maschine eingebrachten Wicklung dabei gleichzeitig der Wickelkopf geformt. Nach dem Abkühlen und Erhärten des Wicklungsverbackstoffes kann dann insbesondere bei kleineren Elektromotoren allein durch das Verbacken ein maßgerechter und formtreuer Wickelkopf gewährleistet werden, ohne daß es dazu zusätzlicher Wickelkopfbandagen oder anderer Hilfsmittel zur Wickelkopfbefestigung bedarf.

Aus der DE-PS 691 196 ist weiterhin ein Verfahren zum Isolieren von Flanschspulenwicklungen bekannt, bei dem herkömmliche Wicklungsdrähte lagenweise unter Zwischenlage von Isolierblättern auf einen mit Flansch versehenen Spulenkörper aufgebracht und zwischen die Wicklungsstirnen und den Flanschen Isoliermaterial in Form von Bändern, Fäden oder dergleichen aus Isoliermaterial oder aus mit solchem Material getränkten Faserstoff unter Druck hineingewickelt wird; die isolierenden Fäden, Bänder oder dergleichen sollen gegebenenfalls außer an den Stirnseiten auch mindestens auf einen Teil des äußeren Spulenumfangs aufgewickelt werden und ohne Druck von außen eine genügend dichte, feste und praktisch homogene Isolation ergeben.

Schließlich ist durch die DE-PS 16 13 209 noch ein Verfahren zum Aushärten von aus backlackisolierten Drähten bestehenden Statorwicklungen bekannt, bei dem durch eine besondere Vorrichtung sowohl axialer als auch zusätzlich radialer Preßdruck auf die Spulenwicklung ausgeübt wird, derart daß beim Verbacken der Wicklung die Zwischenräume zwischen den Wicklungen mit thermoplastischer Isoliermasse ausgefüllt und somit auf möglichst einfache Weise eine weitgehend hohlraumfreie
Ständerwicklungsisolation geschaffen wird.

Selbst wenn man eine derartige axiale und radiale Druckausübung vorsieht, läßt sich jedoch bei Bewicklung der
Nuten eines Ständer- oder Läuferpaketes nicht der hohe
Nutfüllfaktor erreichen, der bei Verwendung eines üblichen,
lediglich lackisolierten Wicklungsdrahtes ohne äußeren
Backlackauftrag erreichbar wäre, da der den Wicklungsdraht
umgebende Backlackauftrag den Durchmesser des Spulenwicklungsdrahtes und somit deren gegenseitigen Abstand der
Drähte oder die zwischen Wicklungsdrahtlagen aufgetragenen
Schmelzkleberzwischenlagen den gegenseitigen Abstand der
Drahtlagen vergrößert. Ein noch wesentlich schlechterer
Nutfüllfaktor ergibt sich im unverpreßten Zustand einer
Backlackdraht-Wicklung, so daß im allgemeinen bei Bewicklung eines Ständer- oder Rotorpaketes ein Preßdruck zum
Verbacken und Verdichten der Backlackdraht-Wicklung benötigt wird, der wesentlich größer ist als der allein
zum Verbacken erforderliche Druck.

Aufgabe der vorliegenden Erfindung ist es daher, bei in
Nuten von Blechpaketen elektrischer Kleinmaschinen einzubringenden Wicklungen unter Ausnutzung der Vorteile der
Spulenwicklungsverfestigung, insbesondere der formtreuen
Wickelkopfhalterung, mittels eines der Wicklung beigegebenen, verbackbaren Depotmaterials mit einfachen Mitteln
einen hohen, durch die Depotmaterial-Beigabe nicht oder
nicht wesentlich verminderten Nutwicklungsfüllfaktor
erreichen zu können.

Die Lösung dieser Aufgabe ist bei einem Verfahren der
eingangs genannten Art durch die kennzeichnende Lehre des
Hauptanspruchs möglich. Die Gegenstände der Unteransprüche
betreffen vorteilhafte Ausgestaltungen der Erfindung.

Durch das erfindungsgemäße Einbringen von backfähigem Depotmaterial in eine Wicklung durch gleichzeitiges, paralleles Wickeln eines diskreten Depotfadens einerseits und eines Leiterdrahtes andererseits kann einerseits auf speziellen Backlackdraht verzichtet und normaler Kupferlackdraht mit parallelem, frei kombinierbaren Depotfaden verwendet und andererseits ein gegenüber einer Backlackdrahtwicklung oder einer mit Zwischenlagen aus backfähigem Depotmaterial versehenen Drahtwicklung wesentlich erhöhter Füllfaktor der gewickelten Spulenwicklung erreicht werden. In vielen Fällen kann auf ein gesondertes Verpressen unter zusätzlichem Formdruck zur Erhöhung des Nutfüllfaktors der in Nuten eines Motorblechpaketes eingewickelten Wicklung verzichtet werden, da das Depotmaterial des parallel mitgewickelten Depotfadens, z.B. im Gegensatz zu Backlackdrähten, beim Wickeln in die Zwickel zwischen den in der fertigen Spulenwicklung benachbarten Wicklungsdrähten gedrückt wird bzw. sich selbst einlegt und somit bereits während des Wicklungsvorganges die Hohlräume zwischen den Wicklungsdrähten ausgefüllt werden. Auf ein gesondertes Preßverfahren durch zusätzlichen gesonderten Formdruck kann insbesondere dann verzichtet werden, wenn eine derartige Wicklungsdraht-Vorspannung vorgesehen wird, daß die fertig gewickelte Wicklung ohne gesonderten Formdruck allein durch den Druck der Wicklungsdraht-Vorspannung verbackbar und verfestigbar ist.

Der erfindungsgemäß gleichzeitig Windung für Windung mit dem Wicklungsdraht gewickelte diskrete Depotfaden erlaubt darüber hinaus in vorteilhafter Weise unabhängig vom Querschnitt des isolierten Kupferlackdrahtes verschiedene Querschnitte des Depotfadens, um z.B. ein erhöhtes Depotwerkstoffvolumen bei besonderen Festigkeitserfordernissen zur Verfügung zu stellen oder die Querschnittsform besonderen Lagefigurationen der Leiter innerhalb der Spulenwicklung oder der Spulenwicklung innerhalb einer die Spulenwicklung aufnehmenden Form anzupassen.

Die Erfindung sowie weitere vorteilhafte Ausgestaltungen werden im folgenden anhand schematisch dargestellter Ausführungsbeispiele in der Zeichnung näher erläutert. Darin zeigen:

Fig. 1 im Schnittbild einen lediglich lackisolierte Wicklungsdrähte und gleichzeitig Windung für Windung mitgewickelte diskrete Depotfäden enthaltenden Spulenwicklungsteil im unverbackten Zustand,

Fig. 2 die Spulenwicklung gemäß Fig. 1 im verbackten Zustand,

Fig. 3 bis 8 im Schnittbild verschiedene Ausführungsformen und Anordnungen der Depotfäden im unverbackten Zustand,

Fig. 9 im Schnittbild einen die Kombination von Backlackdrähten und mitgewickelten diskreten Depotfäden enthaltenden Spulenwicklungsteil im unverbackten Zustand,

Fig. 10 die Spulenwicklung gemäß Fig. 9 im verbackten Zustand.

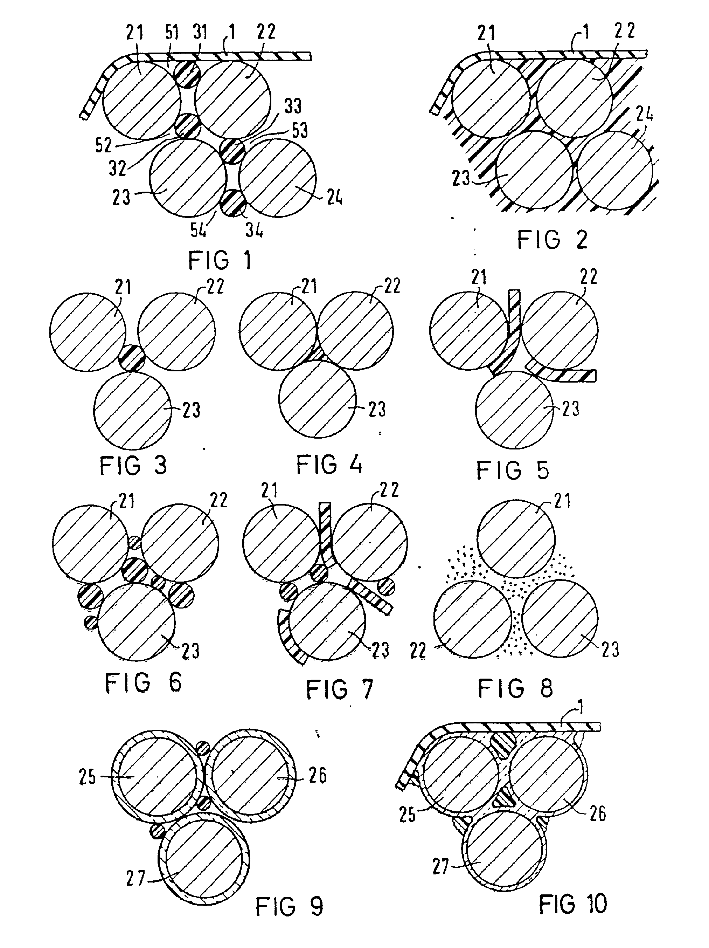

Fig. 1 zeigt im Schnittbild 4 Wicklungsdrähte 21 bis 24 und gleichzeitig mit den Wicklungsdrähten 21 bis 24 mitgewickelte Depotfäden 31 bis 34 einer in eine Nut eines Motorblechpaketes eingebrachten Spulenwicklung im unverbackten Zustand. Die einzelnen Wicklungsdrähte sind beim Direktbewickeln zusammen mit ihrem Depotfaden eingewickelt. Wicklungsdraht und Depotfaden werden dazu zweckmäßigerweise entweder von zwei getrennten Spulenmagazinen oder von einem einzigen Spulenmagazin entnommen, das dann mit einem zuvor verdrillten Wicklungsdraht-Depotfaden-Material bestückt wird; im ersteren Fall ist also überhaupt kein zusätzlicher Zeitaufwand beim Bewickeln notwendig, im letzteren Fall ergibt sich ein besonders guter mechanischer Schutz für den eigentlichen Wicklungsdraht, da beim Direktbewickeln oder beim Einziehen einer Spule der Depotfaden insbesondere wegen seiner früheren Plastifizierung eine "Opferfunktion" gegenüber dem Wicklungsdraht an Quetsch- und Schabezonen, z.B. an den Nutkanten
übernimmt. Die Spulenwicklung kann entweder als Nadelwicklung eingebracht, als Einziehwicklung eingezogen
oder als Träufelwicklung eingelegt werden, in jedem Fall
werden jedoch Wicklungsdraht einerseits und Depotfaden
gleichzeitig parallel gewickelt.

Die äußeren Wicklungsdrähte 21, 22 sind gegenüber der
hier nicht dargestellten oberen Nutwandung durch die Nutisolierung 1 geschützt.

Der jeweils mit dem Wicklungsdraht 21 bzw. 22 bzw. 23
bzw. 24 mitgewickelte Depotfaden 31 bzw. 32 bzw. 33 bzw.
34 legt sich beim Wickeln sowohl in die Zwickel 51 bzw.
52 bzw. 53 bzw. 54 zwischen den gewickelten Wicklungsdrähten bzw. zwischen den Wicklungsdrähten und der
Spulenwicklungshalterung (Nut bzw. Spulenkern), so daß
einerseits ein Ausfüllen der Zwickel und damit ein
Depot in der Wicklung ohne oder ohne wesentliche Füllgraderhöhung erreichbar und andererseits ein mechanischer
Schutz der Drähte gegen Beschädigung durch Werkzeuge oder
die Nutbegrenzungen des Motorblechpaketes schon beim
Einbringen der Wicklung gewährleistbar ist. In der Regel
wird die Querschnittsfläche des Depotfadens so gewählt,
daß sie etwas größer oder gleich groß ist wie die freie
Fläche des Zwickels zwischen den benachbarten Kupfer-
Wicklungsdrähten.

Fig. 2 zeigt die Spulenwicklung gemäß Fig.1 nach dem
Verbacken. Dazu werden nach einer eventuell notwendigen
Vorformung der Wickelkopf und die in den Nuten des Motorblechpaketes befindlichen Spulen ähnlich wie beim Verbacken von reinen Backlackdrahtwicklungen in einer Form
auf das endgültige Maß gepreßt und mittels Wärme verbackt. In üblicher Weise sind Temperaturen und Einwirkungszeit der Wärme je der Art und Anordnung des jeweiligen Depotwerkstoffes anzupassen. Das Einwirken der Wärme kann über elektrische Direktbeheizung der Spulenwicklung oder über beheizte Formen bzw. in einem Wärmeofen erfolgen.

Wird beim Verbacken der Depotfäden die Fließtemperatur des Depotmaterials überschritten, so fließt der Depotwerkstoff unter dem Formendruck bzw. Wicklungsdruck in die noch vorhandenen Hohlräume ein. Wird als Depotwerkstoff ein Thermoplast verwendet, kann anschließend abgekühlt und entformt werden; bei Duroplasten ist zunächst die für die Aushärtung notwendige Reaktionszeit abzuwarten. In günstigen Fällen kann auf ein Verpressen der Spulenwicklung unter Formdruck, insbesondere auf ein Eindrücken in die Nuten eines Motorblechpaketes verzichtet werden, da das Depotmaterial im Gegensatz zu einer allein aus Backlackdrähten gewickelten Spulenwicklung bereits beim Wickeln weitgehend selbsttätig den Platz in den Hohlräumen einnimmt und diese ausfüllt. In einem solchen Fall reicht das Erwärmen und die vorhandene Drahtvorspannung zum Verbacken der Spulenwicklung völlig aus.

In den Figuren 3 bis 5 sind verschiedene Querschnittsformen des erfindungsgemäß vorgesehenen diskreten Depotfadens dargestellt. In vorteilhafter Weise zeigt Fig. 3 die besonders einfache kreisförmige Querschnittsform; gemäß Fig. 4 ist der Querschnitt des unverbackten Depotfadens nach einer weiteren Ausgestaltung der Erfindung polygonförmig ausgebildet; Fig. 5 zeigt in einer weiteren Ausgestaltung rechteckförmige Querschnittsformen der Depotfäden.

Die Querschnittsformen bzw. Anordnungen gemäß den Ausgestaltungen nach Fig. 6 bis 8 verdeutlichen die vorteilhafte Varationsmöglichkeit des erfindungsgemäßen Verbackens von gleichzeitig mit dem eigentlichen Wicklungsdraht gewickelten Depotfäden; da nämlich das Depotmaterial nicht mehr wie bei Backlackdrähten an den Wicklungsdraht und dessen Dimensionierung gebunden ist, können
unabhängig von dem eigentlichen Wicklungsdraht im Sinne
einer guten Verfestigung und gleichzeitig hohen Ausfüllung  verschiedene Querschnittsformen des Depotfadens
kombiniert werden. So zeigt Fig. 6 kreisförmige Depotfäden größeren Durchmessers mittig in den Zwickeln
zwischen den einzelnen Wicklungsdrähten und Depotfäden
kleineren kreisförmigen Querschnittes in den näher
benachbarten Zonen zweier Wicklungsdrähte. Fig. 7 zeigt
eine Kombination zwischen Depotfäden kreisförmigen
Querschnittes und solchen rechteckförmigen Querschnittes.
Fig. 8 zeigt in vorteilhafter Weise ein Depotfadenbündel hoher Flexibilität, das aus vielen Einzelfäden
entsprechend kleineren Querschnitts zusammengesetzt ist.

In Fig. 9, 10 ist demonstriert, daß der erfindungsgemäß
parallel gleichzeitig mitgewickelte diskrete Depotfaden auch vorteilhaft in Kombination mit einem Backlackdraht 25 bis 27 einsetzbar ist. Dies ist insbesondere dann
zweckmäßig, wenn das Depotmaterial des Backlackdrahtes
zur Verfestigung nicht ausreicht und ein für diese
Erfordernisse spezieller Backlackdraht nicht zur Verfügung steht oder aufgrund des zusätzlichen Beschaffungs-
oder Lagerhaltungsaufwandes unwirtschaftlich ist.

Fig. 10 zeigt das Ineinanderfließen der eigentlichen
Backlackschicht der Wicklungsdrähte und des Depotmaterials der diskreten Depotfäden.

Patentansprüche

1. Verfahren zur Herstellung einer elektrischen Wicklung aus einer Vielzahl von Wicklungsdraht-Windungen und einem diskreten, gewickelten backfähigen Depotfaden zur Festlegung der Wicklung, insbesondere zur Herstellung einer in Nuten von Blechpaketen kleiner elektrischer Maschinen einzubringenden Wicklung, d a d u r c h   g e k e n n - z e i c h n e t ,   daß der Depotfaden Windung für Windung gemeinsam mit dem Wicklungsdraht gewickelt wird.

2. Verfahren nach Anspruch 1, d a d u r c h   g e - k e n n z e i c h n e t ,   daß Wicklungsdraht und Depotfaden von einem einzigen, mit einem verdrillten Wicklungsdraht-Depotfaden bestückten, Spulenmagazin abgewickelt werden.

3. Verfahren nach Anspruch 1, d a d u r c h   g e - k e n n z e i c h n e t ,   daß Wicklungsdraht und Depotfaden parallel von zwei, jeweils mit einem Wicklungsdraht bzw. mit einem Depotfaden bestückten, Spulenmagazin abgewickelt werden.

4. Verfahren nach einem der Ansprüche 1 bis 3, g e - k e n n z e i c h n e t   durch eine derartige Wicklungsdraht-Vorspannung, daß die fertig gewickelte Wicklung ohne gesonderten Formdruck allein durch den Druck der Wicklungsdraht-Vorspannung verbackbar und verfestigbar ist.

5. Verfahren nach einem der Ansprüche 1 bis 4, g e - k e n n z e i c h n e t   durch die Verwendung eines aus Einzelfäden entsprechend kleineren Querschnitts zusammengesetzten Depotfadenbündels anstelle eines einzelnen Depotfadens.

Bk 2 Bih / 17.03.1981

6. Verfahren nach einem der Ansprüche 1 bis 5, g e -
k e n n z e i c h n e t durch die Verwendung eines
Depotfadens, der eine festigkeitserhöhende Seele aus
mechanisch reißfestem Werkstoff enthält.

7. Verfahren nach Anspruch 6, g e k e n n z e i c h -
n e t durch die Verwendung eines Depotfadens, der
zumindest eine mit backfähigem Depotmaterial getränkte
Glasfaser, insbesondere ein mit backfähigem Depotmaterial getränktes Glasfaserbündel, enthält.

8. Verfahren nach einem der Ansprüche 1 bis 7, g e -
k e n n z e i c h n e t durch die Verwendung eines
Depotfadens mit einem solchen Querschnittsvolumen im
unverbackten Zustand, daß die Zwickel zwischen den jeweils benachbarten einzelnen Wicklungsdrähten der gewickelten verbackten Wicklung mit Depotmaterial ausgefüllt sind.

9. Verfahren nach einem der Ansprüche 1 bis 8, g e -
k e n n z e i c h n e t durch die Verwendung eines
Depotfadens mit einem im unverbackten Zustand kreisförmigen Querschnitt.

10. Verfahren nach einem der Ansprüche 1 bis 8, g e -
k e n n z e i c h n e t durch die Verwendung eines
Depotfadens mit einem im unverbackten Zustand polygonförmigen Querschnitt.

11. Verfahren nach einem der Ansprüche 1 bis 8, g e -
k e n n z e i c h n e t durch die Verwendung eines
Depotfadens, dessen Querschnitt im unverbackten Zustand,
im Sinne einer der Sicherung einer bestimmten Lagefiguration der Wicklungsdrähte zueinander, zwickelförmig
mit den Wicklungsdrähten angepaßten hohlkehlenförmigen
Oberflächen-Ausnehmungen ausgebildet ist.

FIG 1

FIG 2

FIG 3

FIG 4

FIG 5

FIG 6

FIG 7

FIG 8

FIG 9

FIG 10